Europäisches Patentamt

(19) European Patent Office

Office européen des brevets

(11) Numéro de publication: **0 079 841**
**B1**

(12) # FASCICULE DE BREVET EUROPEEN

(45) Date de publication du fascicule du brevet:
**16.01.85**

(21) Numéro de dépôt: **82402108.3**

(22) Date de dépôt: **18.11.82**

(51) Int. Cl.⁴: **F 16 L 55/24**, F 16 L 37/28

(54) **Dispositif terminal d'installation de ravitaillement en carburant.**

(30) Priorité: **18.11.81 FR 8121601**

(43) Date de publication de la demande:
**25.05.83 Bulletin 83/21**

(45) Mention de la délivrance du brevet:
**16.01.85 Bulletin 85/3**

(84) Etats contractants désignés:
**BE DE GB IT**

(56) Documents cités:
**FR - A - 1 320 262**
**FR - A - 1 492 893**
**GB - A - 872 711**
**US - A - 2 093 398**
**US - A - 3 735 874**

(73) Titulaire: **ZENITH-AVIATION, 19, rue Lavoisier,
F-92002 Nanterre Cedex (FR)**

(72) Inventeur: **Dautigny, Jean-Claude, 11, rue Charles
Duport, F-92270 Bois Colombes (FR)**

(74) Mandataire: **Fort, Jacques et al, CABINET
PLASSERAUD 84, rue d'Amsterdam, F-75009 Paris (FR)**

ACTORUM AG

## Description

La présente invention concerne les dispositifs terminaux d'installations de ravitaillement en carburant, du type destiné à être monté à l'extrémité d'un conduit flexible alimenté en carburant sous pression et comportant un boîtier muni de moyens d'accouplement rapide avec un embout d'accrocheur contenant un filtre et une soupape à clapet à déplacement axial.

L'invention trouve une application particulièrement importante, bien que non exclusive, dans le domaine du remplissage des réservoirs des avions de transport gros porteurs à partir de camions-citernes. La camion porte une pompe qui débite le carburant à travers un filtre à mailles fines dans le flexible. Le dispositif terminal se raccorde par son accrocheur au réservoir de l'avion. Un filtre supplémentaire, à larges mailles, doit être prévu dans le dispositif terminal pour retenir les limailles ou particules de rouille provenant du flexible, ainsi que les pièces qui peuvent s'y trouver accidentellement.

Il existe déjà de très nombreux dispositifs destinés à permettre le raccordement d'un conduit flexible avec un réservoir. Le brevet FR-A N° 1320262 décrit un dispositif du type ci-dessus défini comportant un clapet dont l'ouverture et la fermeture s'effectuent manuellement, avec le risque d'oublier de refermer le clapet. Le brevet FR-A N° 1333860 décrit un tel dispositif terminal dont le filtre est placé dans l'obturateur d'une vanne-boule dont le boîtier comprend un orifice transversal obturable par un bouchon étanche. La vanne permet non seulement d'interrompre la communication entre le flexible et l'accrocheur, mais encore, lorsqu'elle est en position fermée, d'extraire le filtre par l'orifice pour vérification et, éventuellement, remplacement. L'apparition des avions gros porteurs, dont les réservoirs ont une grande contenante, a conduit à augmenter les débits de remplissage à assurer, donc les vitesses et les pressions motrices. Pour que les pertes de charge correspondantes ne soient pas excessives, il est nécessaire de donner au filtre une surface filtrante trop importante pour que le filtre trouve place dans la boule. Etant donné qu'il est nécessaire que le dispositif terminal autorise un accès facile au filtre, pour permettre une vérification fréquente (pratiquement une fois par semaine environ), la société titulaire a réalisé des dispositifs du type ci-dessus défini dont le filtre est retenu par les moyens d'accouplement rapide. On peut ainsi ôter le filtre, le vérifier et éventuellement le changer par des opérations simples. Mais on peut craindre des désaccouplements intempestifs des moyens d'accouplement alors que l'installation débite du carburant, ce qui se traduit par des risques d'incendie si le débit est élevé. En effet, la vanne et/ou les moyens d'interruption du débit prévus sur la pompe ou la citerne n'interrompent le débit qu'avec un retard tel que des volumes importants de carburant peuvent se déverser à l'extérieur.

La présente invention vise à fournir un dispositif du type ci-dessus défini répondant mieux que ceux antérieurement connus aux exigences de la pratique, notamment en ce qu'il évite tout déversement important en cas de désaccouplement intempestif.

L'invention consiste en un dispositif terminal d'installation de ravitaillement en carburant selon la revendication 1. L'invention propose notamment un dispositif dans lequel l'embase du filtre comporte des moyens de butée coopérant avec le clapet pour le maintenir en position d'ouverture contre l'action de moyens élastiques de fermeture lorsque l'embout contenant le filtre est fixé au boîtier.

Cette disposition suivant l'invention offre un avantage supplémentaire: la soupape à clapet reste fermée si l'embout est fixé sur le boîtier sans que le filtre soit en place. On évite ainsi d'alimenter des réservoirs alors que le filtre n'est pas en place. Il s'agit là d'un progrès d'autant plus important que l'on a noté par le passé des oublis fréquents de remise en place du filtre lors du remontage.

Dans la pratique, les moyens de butée pourront prendre de nombreuses formes différentes. Il semble toutefois avantageux de les réaliser sous la forme d'une barrette transversale solidaire de l'embase du filtre et coopérant avec une tige prolongeant le clapet. L'embase sera généralement pincée entre l'embout et la partie du boîtier munie des moyens d'accouplement rapide de façon à être automatiquement dégagée lors du désaccouplement. Le clapet sera en général guidé par coulissement d'un prolongement tubulaire sur une queue solidaire d'un corps fixé dans le boîtier et délimitant avec lui un passage annulaire de circulation du carburant. Le corps et le clapet seront profilés pour imposer une perte de charge aussi faible que possible au carburant lorsque la soupape est en position d'ouverture. Le prolongement et la queue délimitent avantageusement une chambre reliée à l'intérieur du boîtier par un trou calibré de façon à constituer un amortisseur, ou dashpot, ralentissant le mouvement de fermeture de la soupape pour éviter les surpressions brutales en cas de désaccouplement, surpressions qui seraient susceptibles d'endommager l'installation.

L'invention sera mieux comprise à la lecture de la description qui suit d'un dispositif qui en constitue un mode particulier de réalisation, donné à titre d'exemple non limitatif, et de la comparaison qui en est faite avec un dispositif suivant l'art antérieur.La description se réfère aux dessins qui l'accompagnent, dans lesquels:

— la fig. 1 montre un dispositif terminal de type connu,

— la fig. 2 est une vue en perspective, avec des parties arrachées, montrant un dispositif constituant un mode particulier de réalisation de l'invention,

— la fig. 3 montre, en coupe suivant un plan passant par l'axe, le mode de coopération du filtre et de la soupape.

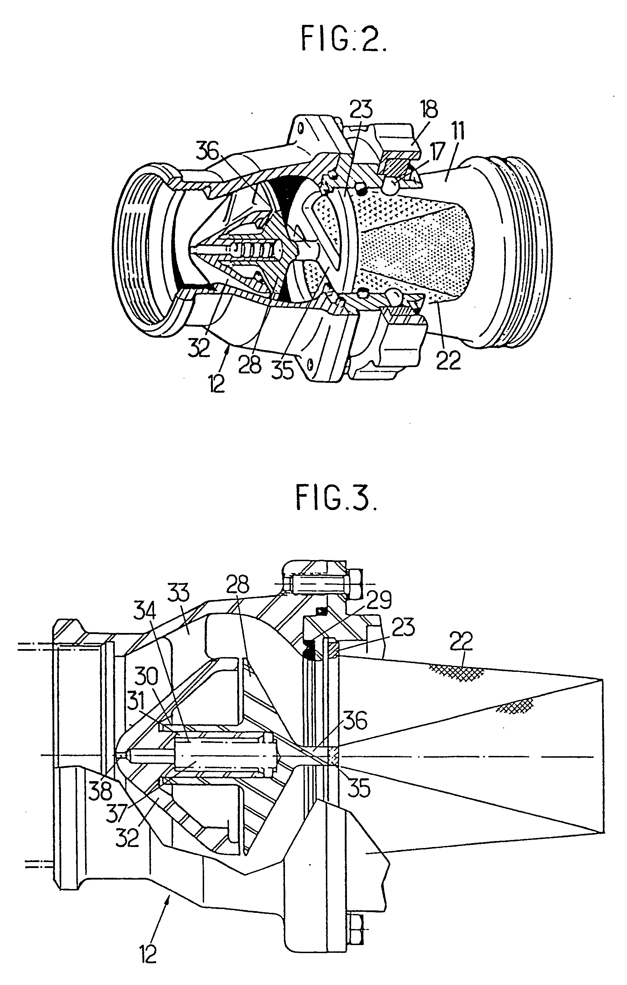

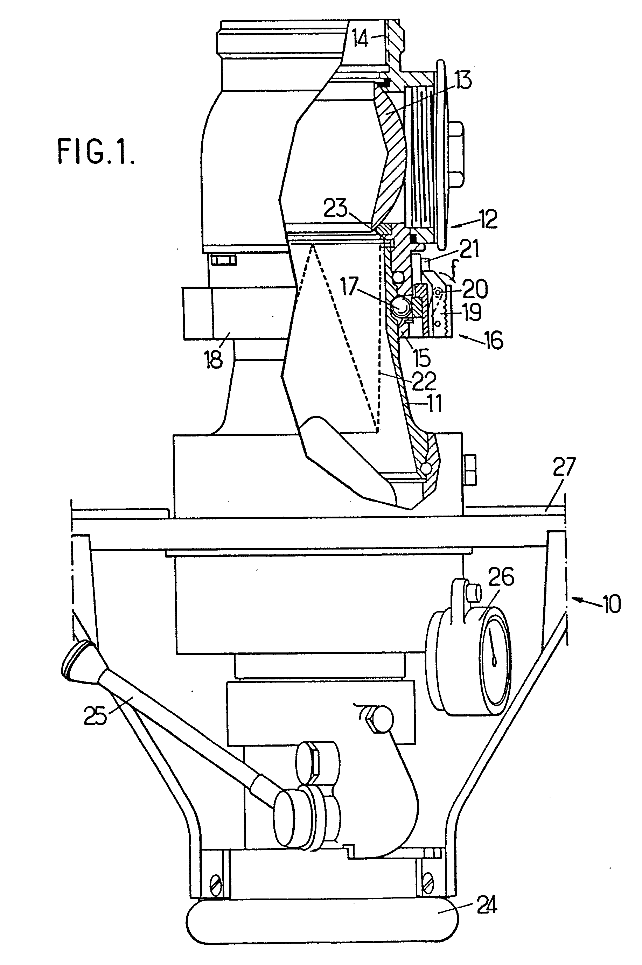

Le dispositif montré schématiquement en fig. 1 comprend un accrocheur 10 destiné à se monter sur un orifice de réservoir et équipé d'un embout 11 de liaison avec un boîtier 12 contenant une vanne-boule d'obturation 13. La vanne-boule 13 permet de séparer une entrée 14, prévue pour se raccorder à un flexible, d'un manchon de sortie 15 équipé de moyens d'accouplement rapide avec l'embout 11. Dans le mode de réalisation représenté, ces moyens d'accouplement ou de raccordement rapide 16 comportent une série de billes 17 destinées à s'engager dans des logements du raccord, pouvant se déplacer radialement dans des trous radiaux du manchon 15. Les moyens de raccordement rapide comprennent encore une bague 18 présentant une face interne en forme de came qui, suivant la position angulaire de la bague, maintient les billes 17 enfoncées (fig. 1) ou, au contraire, les libère. Des moyens d'immobilisation de la bague 18 en rotation comportent un loquet 19 monté dans une chape solidaire de la bague 18, repoussé par un ressort dans la position montrée en fig. 1 et pouvant basculer autour d'un axe 20 dans la direction indiquée par la flèche f. Lorsque le loquet 19 est libre, il interdit le basculement d'un loquet transversal 21, également basculant, interdisant la rotation de la bague 18 sur le manchon 15 lorsqu'il est dans la position de repos montrée en fig. 1.

L'embout 11 contient le filtre 22 en double cône pour augmenter la surface filtrante. L'embase 23 de ce filtre est pincée entre l'embout 11 et le boîtier, de façon à se trouver libérée lors du désaccouplement des moyens de raccordement rapide. Ainsi, le filtre peut être vérifié ou changé chaque fois que l'accouplement rapide est désaccouplé, que ce soit pour vérification ou pour changement de l'accrocheur 10. La vanne-boule 13 n'a plus pour but que de permettre l'obturation de l'extrémité du flexible d'alimentation relié à la vanne.

L'accrocheur peut être de type quelconque. Dans le cas illustré, il comprend une tête d'accrochage 24 entraînée en rotation à l'aide d'un volant 27, d'une manette 25 qui permet d'ouvrir ou de fermer une soupape lorsque l'accrocheur est accouplé, et un régulateur incorporé permettant de maintenir la pression à une valeur déterminée (typiquement 3,5 bar), visible sur un manomètre 26. Le boîtier de l'accrocheur proprement dit est solidarisé de l'embout 11 par des moyens qui, dans le cas illustré en fig. 1, sont constitués par des billes de verrouillage longitudinal et des vis de blocage en rotation.

Un tel dispositif permet de changer aisément l'accrocheur et/ou le filtre. Il assure également une grande sécurité de verrouillage: on voit que, pour séparer l'embout du boîtier de vanne, il faut appuyer sur la partie crantée du loquet 19 pour soulever son bec, et appuyer sur le loquet 21 pour le dégager du loquet 19 avant de faire tourner la bague 18. Mais, d'une part, cette grande sécurité n'est pas obtenue avec tous les types de raccords d'accouplement rapide et, d'autre part, rien n'indique si le filtre 22 est bien en place.

Dans le dispositif suivant l'invention représenté à titre d'exemple sur les fig. 2 et 3 (où les organes correspondant à ceux déjà représentés portent le même numéro de référence), les moyens d'obturation contenus dans le boîtier sont constitués par une soupape à clapet à guidage axial. Le clapet 28 présente une face aval conique destinée à venir s'appliquer de façon étanche contre un joint 29 porté par le boîtier. A l'opposé de la face conique, le clapet présente un prolongement tubulaire 30 qui coulisse axialement sur une queue 31 d'un corps 32 soidarisé de la paroi du boîtier par des ailettes 33. Un ressort de rappel 34 interposé entre le clapet et le corps tend à amener le clapet en position de fermeture, ainsi que les efforts hydrodynamiques lorsque du carburant traverse le dispositif. La paroi interne du boîtier, le corps 31 et le clapet 28 sont profilés de façon à réduire les pertes de charge subies par le carburant à la traversée du dispositif.

Le clapet 28 et le filtre 22 comportent des moyens coopérant pour maintenir le clapet 28 en position d'ouverture aussi longtemps que l'embout 11 (non représenté sur la fig. 3) contenant le filtre est accouplé au boîtier. Ces moyens comportent, dans le cas représenté en fig. 2 et 3, une barrette transversale 35 solidaire de l'embase 23 du filtre et une tige 36 prolongeant le clapet vers l'avant. Lorsque le dispositif est monté, la barrette 35 maintient le clapet 28 en position de pleine ouverture, contre le corps 32. Si, au contraire, le filtre n'est pas en place, le ressort 34 ramène le clapet 28 sur son siège.

En cas de désaccouplement intempestif alors que le dispositif débite, l'action combinée du ressort 34 et des forces hydrodynamiques risque de projeter brutalement le clapet 28 sur son siège et de créer des surpressions incompatibles avec la tenue du flexible. Pour écarter cette difficulté, on réduit la communication entre la chambre 37 ménagée par la queue 31 et le prolongement 30, et l'extérieur à un orifice calibré 38. On constitue ainsi un dashpot qui freine la fermeture du clapet et limite la surpression. Le trou calibré 38 a un diamètre choisi pour limiter les surpressions à une valeur compatible avec la tenue des composants de l'installation (typiquement 8 bar), tout en évitant un déversement excessif de carburant. A titre d'exemple, on peut indiquer que ce résultat est atteint en donnant au trou un diamètre de l'ordre de 1 mm dans le cas d'une installation prévue pour fournir un débit de l'ordre de 80 m³/h.

**Revendications**

1. Dispositif terminal d'installation de ravitaillement en carburant, destiné à être monté à l'extrémité d'un conduit flexible alimenté en carburant sous pression et comportant un boîtier muni de moyens d'accouplement rapide avec un embout accrocheur contenant un filtre amovible et une soupape à clapet (28) à déplacement axial, caractérisé en ce que l'embase (23) du filtre comporte des moyens de butée coopérant avec le clapet, nécessaires pour maintenir le clapet en position d'ouverture contre l'action de moyens élastiques de fermeture lorsque l'embout (11) contenant le filtre (22) est fixé au boîtier.

2. Dispositif suivant la revendication 1, caractérisé en ce que les moyens de butée comprennent une barrette transversale (35) solidaire de l'embase et coopérant avec le clapet, éventuellement prolongé par une tige (36) de contact avec la barrette.

3. Dispositif suivant l'une des revendications 1 ou 2, caractérisé en ce que l'embase du filtre est prévue pour être immobilisée entre l'embout (11) et le boîtier de façon à être dégagée lors du désaccouplement des moyens d'accouplement rapide.

4. Dispositif suivant l'une des revendications précédentes, caractérisé en ce que la soupape comprend des moyens de guidage axiaux constitués par un prolongement (30) du clapet coulissant sur une queue (31) d'un corps central (32) solidarisé du boîtier.

5. Dispositif suivant la revendication 4, caractérisé en ce que le clapet (28) et le corps (32) sont profilés de façon à réduire les pertes de charges imposées à l'écoulement de carburant lorsque la soupape est ouverte.

6. Dispositif terminal suivant l'une des revendications 4 ou 5, caractérisé en ce que la queue (31) et le prolongement (30) délimitent une chambre (37) reliée à l'intérieur du boîtier par un orifice calibré (38) agissant en dashpot pour freiner la fermeture de la soupape.

7. Dispositif suivant l'une des revendications précédentes, caractérisé en ce que le clapet présente une face plate arrière et une face avant conique destinée à venir s'appliquer sur un siège comprenant un joint serré entre deux pièces du boîtier dont l'une sert également d'appui à l'embase du filtre.

## Claims

1. End device for a fuel supply system, for location at the end of a flexible conduit fed with fuel under pressure and having a housing provided with means for rapid coupling with a latching fitting accommodating a removable filter and a valve having an axially movable valve member (28), characterized in that the base (23) of the filter comprises abutting means cooperating with the valve member, necessary for maintaining the valve member in open condition against the action of resilient closing means when the fitting (11) accommodating the filter (22) is connected to the housing.

2. Device according to Claim 1, characterized in that the abutting means comprises a transverse bar (35) fast with the base and cooperating with the valve member which possibly has a projecting rod (36) for contact with the bar.

3. Device acording to Claim 1 or 2, characterized in that the base of the filter is formed for being locked between the fitting (11) and the housing for being released upon uncoupling of the rapid coupling means.

4. Device according to any one of the preceding claims, characterized in that the valve comprises axial guiding means consisting of an extension (30) of the valve member slidably received on a tail portion (31) of a central body (32) fast with the housing.

5. Device according to Claim 4, characterized in that the valve member (28) and the body (32) are stream-lined for reducing the head losses to which the flow is subjected when the valve is open.

6. End device according to Claim 4 or 5, characterized in that the tail (31) and the extension (30) define a chamber (37) which is connected to the inside of the housing by a calibrated orifice (38) which operates as a dashpot for braking the closing movement of the valve.

7. Device according to any one of the preceding claims, characterized in that the valve member has a rear flat surface and a conical front surface provided for engaging a seat having a seal clamped between two parts of the housing, one of which constitutes an abutment for the base of the filter.

## Patentansprüche

1. Endvorrichtung einer Kraftstoffversorgungsanlage zur Befestigung einer biegsamen Leitung, die mit unter Druck stehendem Kraftstoff gespeist wird und ein Gehäuse aufweist mit einer Einrichtung zum Schnellkuppeln mit einem Kupplungsendstück, das einen abnehmbaren Filter und ein Ventil mit axial verschiebbarem Verschlussglied (28) aufweist, dadurch gekennzeichnet, dass der Befestigungssitz (23) des Filters Anschlagmittel aufweist, die mit dem Verschlussglied zusammenarbeiten und erforderlich sind, um das Verschlussglied gegen die Wirkung von elastischen Schliessmitteln in Öffnungsstellung zu halten, wenn das den Filter (22) enthaltende Endstück am Gehäuse befestigt ist.

2. Vorrichtung nach Anspruch 1, dadurch gekennzeichnet, dass die Anschlagmittel einen Quersteg (35) aufweisen, der mit dem Befestigungssitz verbunden ist und mit dem Verschlussglied zusammenarbeitet, gegebenenfalls verlängert durch eine mit dem Steg in Berührung stehende Stange (36).

3. Vorrichtung nach einem der Ansprüche 1 oder 2, dadurch gekennzeichnet, dass der Befestigungssitz des Filters zwischen dem Endstück (11) und dem Gehäuse derart festgelegt ist, dass er während des Abkuppelns der Schnellkupplungseinrichtung freigegeben wird.

4. Vorrichtung nach einem der vorhergehenden Ansprüche, dadurch gekennzeichnet, dass das Ventil axiale Führungsmittel aufweist, die durch eine Verlängerung (30) des Verschlussgliedes gebildet sind, die auf einem Ansatz (31) eines mit dem Gehäuse verbundenen zentralen Körpers (32) verschiebbar ist.

5. Vorrichtung nach Anspruch 4, dadurch gekennzeichnet, dass das Verschlussglied (28) und der Körper (32) derart profiliert sind, dass die bei offenem Ventil an der Kraftstoffströmung auftretenden Druckabfälle vermindert sind.

6. Endvorrichtung nach einem der beiden Ansprüche 4 oder 5, dadurch gekennzeichnet, dass der Ansatz (31) und die Verlängerung (30) eine Kammer (37) begrenzen, die mit dem Innenraum des Gehäuses über eine kalibrierte Öffnung (38) verbunden ist, die zum Bremsen des Schliessendes des Ventils als Dämpfer wirkt.

7. Vorrichtung nach einem der vorhergehenden Ansprüche, dadurch gekennzeichnet, dass das Verschlussglied eine flache Rückseite und eine konische Vorderseite hat, die zur Anlage an einem Sitz bestimmt ist, der eine Dichtung aufweist, die zwischen zwei Teilen des Gehäuses eingeklemmt ist, von denen das eine auch als Anlagefläche für den Befestigungssitz des Filters dient.

# FIG.2.

# FIG.3.

FIG.1.